# EUROPEAN PATENT SPECIFICATION

(11) **EP 2 762 731 B1**
(45) Date of publication and mention of the grant of the patent: **02.05.2018**
(21) Application number: 13153685.6
(22) Date of filing: 01.02.2013
(51) Int. Cl.: F16B 5/00, B23K 20/12

(54) **Method for joining at least two parts and overlap joint**
Verfahren zur Verbindung von mindestens zwei Teilen und Überlappungsverbindung
Procédé pour assembler au moins deux parties et joint de recouvrement

(43) Date of publication of application: 06.08.2014
(73) Proprietor: Airbus Operations GmbH, 21129 Hamburg (DE)
(72) Inventor: Neuhaus, Frank, 21129 Hamburg (DE); Juedes, Wolfgang, 21129 Hamburg (DE); Wulfsberg, Jens, 23843 Neritz (DE); Hameister, Henry, 22089 Hamburg (DE)
(74) Representative: LKGLOBAL Lorenz & Kopf PartG mbB Patentanwälte

(56) References cited:
- WO-A1-02/062518
- DE-A1- 19 620 814
- FR-A1- 2 883 499
- US-A- 3 477 115
- US-A- 4 437 784
- US-B1- 6 227 433

## Description

The invention concerns to a method for joining at least two parts in an overlap joint, according to the preamble of claim 1 and an overlap joint between at least two parts, according to the preamble of claim 6, both as for example known from US-B1-6 277 433. A method for joining two parts in an overlap joint is known from DE 10 2005 037 134 A1. A part having a low melting point is positioned partially on a lower part having a high melting point. In the overlap area, the lower part has a lot of recesses which are opened to the upper part. The parts are joined by friction welding, wherein a rotating pin is pressed against the upper part in longitudinal direction. As a consequence, material of the upper part is partially plasticized, pressed into the recesses of the lower part and cured such that a form fit is created.
Another method is known from the German patent application DE 10 2009 018 151 A1 of the applicant. As disclosed in the patent application, an upper metal part is arranged in overlap with a lower plastic part, wherein in one embodiment the lower plastic part has a recess that extends in longitudinal direction of the overlap area and is opened to the upper metal part. A rotating pin is guided over the upper metal part in longitudinal direction of the overlap area. Due to the friction and pressure of the rotating pin acting on the upper metal part, heat is produced that causes material from the lower plastic part to be plasticized in the area of the overlap. As a result, the plasticized material of the lower plastic part penetrates into the recess of the metal part and cures afterwards. According to this known method, the parts are fixed to each other by a form fit and by adhesive forces acting between them.
A further method for joining two parts in an overlap joint is known from EP 1 429 887 B1. A rotating plug is inserted into apertures of two metal parts in their overlap area. Adjacent apertures form an overlap area as well, wherein due to the friction of the rotating plug a longitudinal weld seam is established.
In DE 10 2007 028 789 A1 a method is shown by which a part having a high melting point penetrates at least partially into a part having a low melting point due to a relative movement of both parts, wherein the high melting part does not change its shape during assembly at least in the area into which the high melting part penetrates. The high melting part is made from metal and a thread insert, for instance, and the low melting part is based on plastic, for instance. The low melting part is heated up in a penetration area such that the low melting part is locally plasticized and the high melting part can introduce into the low melting part. After the penetration, the low melting part cures and the high melting part is connected thereto in a form fit.
The object of the invention is to specify an alternative method for joining at least two parts in an overlap joint. Furthermore, it is an object of the invention to create an overlap joint with a high mechanical load capacity.
This object is achieved by means of a method with the features of claim 1 and by means of an overlap joint with the features of claim 6.
According to the invention, at least two parts are partially positioned in an overlap, wherein in the case that the parts have different melting points the part having the lower melting point is positioned on the part having the higher melting point. Then, a tool having a shank and a broadened head is positioned in a tool holder, wherein a contact surface of the head extends over the tool holder in feeding direction. After that, the tool holder is rotated and the tool is pressed with its shank against the upper part in the direction of the lower part until the shank penetrates the upper part and the lower part. Then, when the upper part is clamped between the lower part and the tool head the movements of the tool holder are stopped.

The inventive method is a kind of combination of friction spot welding and riveting, wherein the tool is left in the parts and acts as a kind of rivet or temporary fastener afterwards. Due to the pressure force acting in axial direction of the tool and due to the rotation of the tool on the parts, there is a relative movement between the parts and the tool, whereupon friction and thus heat is generated locally in the overlap area which causes the material in the local overlap area to be plasticized. As a result, the tool penetrates the parts, wherein the tool is joined in metallic continuity with the lower part and if the upper part has a lower melting point as the lower part, the upper part is fixed to the lower part by form fit due to the broadened head. In addition, the upper part is joined to the tool and in particular to the contact surface of the head by adhesive force. Thus, the method enables a fast and reliable joint between at least two parts being in overlap. As the contact surface of the tool heat project to the tool holder in the feeding directing, a contact between the tool holder and the upper part is avoided. Thus, the tool can directly be moved forward to its end position without any interruption. For instance, the method can be used in the aircraft industries on a primary structure level for joining fuselage sections by butt joints. Contrary to a known method for creating a fuselage section butt joint, the following steps can be omitted: pre-drilling, separating the fuselage sections, cleaning the contact surfaces of the fuselage sections, re-aligning, final-drilling, and riveting. By use of the inventive method, the fuselage sections can be aligned to each other and joint directly, thus enabling a time saving one-way assembly. According to another exemplary embodiment, the inventive method is used for fixing a system holder (bracket) or cable holder (bracket) to a structure section such as a frame or a stringer of an aircraft. Thus, this method is also applicable for joining parts on a secondary structure level of aircrafts, e.g. clips, cleats, shear webs, frame couplings and brackets.

Preferably, in order to create a high quality weld joint between the tool and the lower part, a tool is used that has at least similar material characteristics as the lower part, preferably the same material characteristics as the lower part. However, a material incompatibility between the upper part and the tool material has to be avoided. For instance, if the upper part is a carbon fibre reinforced plastic apart, it is preferred if the tool is not made from aluminium, but from an alternative material such as titanium that does not show any material incompatibilities with the carbon fibres. As a matter of course, the tool need to have such a minimum strength depended on the parts and the process parameters such as feed rate, penetration depth, etc. A further important criteria for choosing an adequate tool material is the tool geometry such as the shank diameter and the form of the shank front end. For example, the front end can be conically shaped for simplifying the introduction of the shank into the upper part. Additionally, the shank can have a smooth circumferential surface or in order to enhance the friction between parts and the shank, its circumferential surface can be rough. The circumferential shank surface can also be provided with a kind of thread for simplifying the penetration. Of course, the circumferential shank surface can also be shaped partially different. For instance, the shank can have an upper portion having at least one recess or projection for creating a form fit with the upper part and a smooth lower portion.

In one embodiment, the upper part is made from plastic and the lower part is metallic. The plastic can be a thermoset material or a thermoplastic. For instance, the upper part is a fibre reinforced composite part and the lower part is made from aluminium or based on an aluminum alloy. Thus, thanks to the inventive method, hybrid components can be produced, whose single parts can't be joint by metallic continuity due to the material characteristics of at least one of the parts, actually. If as in an alternative example, the upper part is a carbon fibre reinforced composite part, it is preferred if the lower part is made from titanium or such a metallic material that does not show any material incompatibilities with the carbon fibres. The tool is then made from titanium as well in order to create a high quality weld joint with the lower part to avoid any material incompatibilities with the carbon fibres. Alternative, both parts are metallic parts. For instance, the upper part is made from aluminium and the lower part is made from titanium. The tool is then made from titanium as well to create a high quality weld joint with the lower part. In one embodiment, the upper part and the lower part are based on the same material and both are made from aluminum. In particular it is generally preferred, if the metal materials are made from nonferrous metals.

In order to avoid cavities between the parts in the area of the overlap due to local tolerance gaps or unevenness of the parts, a sealant can be positioned between them. Exemplary, the sealant is a paste that cured between the parts. Thereby, the sealant does not have any negative impact on the overlap joint.

Additionally or alternatively to the sealant, a shim can be positioned between the upper part and the lower part. Preferably, the shim acts as a kind of isolator or dielectric medium and prevents and surface to surface contact of the parts in the overlap area. Hereby, the parts can be made from materials that are not chemical resistant to each other. For instance, the upper part can be a carbon fibre reinforced plastic part and the lower part can be an aluminum part. Then the shim can be made from titanium, for instance, as titanium has a high material compatibility with carbon fibres or with aluminium. As a matter of course, the shim can also only act as an adapter for equalizing tolerances. In this case, the shim does not act as a kind of dielectric medium so that the material of the shim does not have to be adapted to the parts material as described before. In order to avoid a pre-drilling of the shim in the area of the tool penetration, preferably the shim consists of a material that has a melting point that is lower than or at the same level as the melting point of the lower part.

In order to ensure a reliable quality of the overlap joint, process parameters can be controlled and in the case of one of the parameters is out of tolerance the relevant process parameter is corrected automatically in real time or the tool holder movements are stopped. Exemplary process parameters are the rotating speed and the pressure force of the tool holder, the temperature of the tool shank, the temperature of the lower part and/or upper part in the overlap area, the feed rate of the tool holder and penetration depth of the tool shank.

A preferred overlap joint between at least two parts comprises at least two parts that are joined together by a tool extending with its shanks to the upper part and penetrating the lower part, wherein the shank is in metallic continuity with the lower part and the upper part is at least clamped between a tool head and the lower part. Such an overlap joint has a high mechanical load capacity. Additionally to the clamping of the upper part, adhesive forces can act between the upper part and the tool enhancing the mechanical load capacity.

Other advantage examples of the embodiment of the invention are the subject of further subsidiary claims.

In what follows, preferred examples of the embodiment of the invention are elucidated in more detail with the help of schematic representations. Here:
- Figure 1: shows a perspective view on an overlap joint of two parts according to the invention,
- Figure 2: shows the parts, a tool and a tool holder arranged for creating the overlap joint, and
- Figure 3 to 5: show steps of the method according to the invention in order to create the overlap joint.

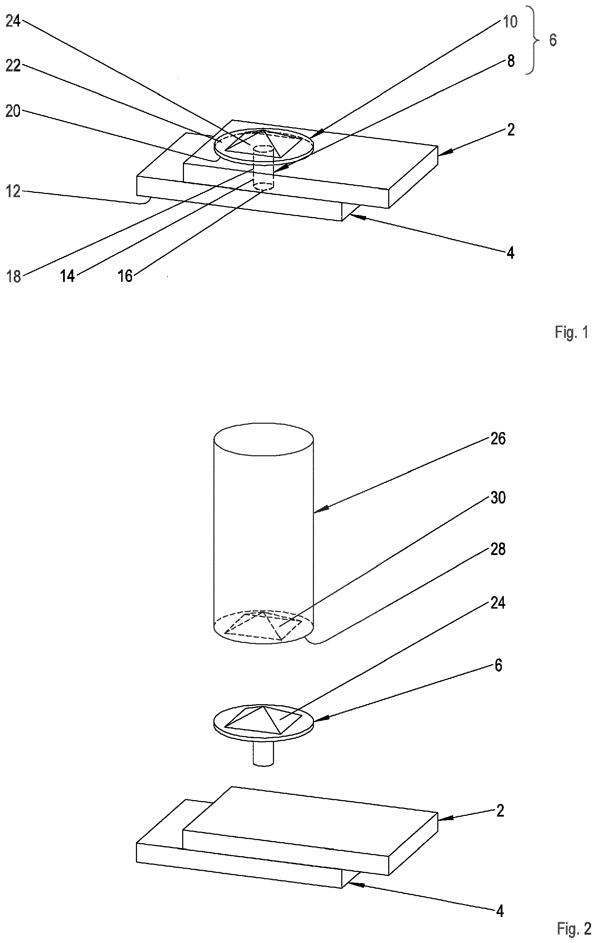

In figure 1, two parts 2, 4 are shown that are joined together by an overlap joint according to the invention. An upper or front part 2 is partially positioned on a lower or rear part 4 and fixed to it by a tool 6.

In the overlap area, the upper part 2 is made from a material that has the same melting point as or a lower melting point than the material of the lower part in the overlap region. For example, the upper part 2 is made from a fibre reinforced plastic and the lower part is made from a metallic material and in particular from a steel free metallic material such as aluminium, titanium or an aluminium alloy. Preferred fibres are carbon fibres, glass fibres, Aramid® fibres etc. The matrix of the upper part in which the fibres are embedded preferably based on a thermoplastic resin. As a matter of course, the upper part can also be made from aluminum and the lower part can then be made from aluminium as well or from a different steel free material having a higher melting point such as titanium. However, in the shown embodiment the upper part 2 is made exemplary from a glass fibre reinforced plastic (GFRP) and the lower part 4 is based on aluminium.

The tool 6 has a rivet-like shape with a shank 8 and a head 10. The shank 8 is illustrated by dotted lines and extends from the head 10 which is broadened in radial direction regarding the shank 8. As in the shown embodiment the lower part 4 is made from aluminium basically, the tool 6 is made from aluminium as well in order to create a high weld joint between the tool 6 and the lower part 3. As in the shown embodiment the upper part 2 contains glass fibres, the tool 6 and the upper part 2 show a high material compatibility to each other. Any negative impact of glass fibres on the aluminium tool 6 can be suspended. However, if for example the upper part 2 would be a carbon fibre reinforced plastic part and the lower part 4 would be a titanium part, the tool 6 would be made from titanium as well in order to create a high weld joint between the tool 6 and the lower part 4 and in order to avoid any negative impact of the carbon fibres on the tool 6.

The shank 8 has an extension in axial direction of the tool 6. It is shorter than a material thickness overall in the area of the overlap joint but larger than a material thickness of the upper part 2. Hereby, on the one hand it is secured that the shank 8 can penetrate the lower part 2 and, on the other hand it is avoided that the shank 8 penetrates the lower part 2 over its entire thickness and protrudes over a lower surface 12 of the lower part 4. Preferably, the shank 8 has the same material characteristics as the lower part 4, wherein material incompatibilities between the tool 6 and the upper part 2 has to be avoided.

The shank 8 has in the shown embodiment a cylindrical shape with a constant outer diameter and with a smooth circumferential surface. It has a lower shank portion 14 forming a pressure or friction surface 16 and an upper shank portion 18. The friction surface 16 is in the shown embodiment flat and smooth. The tool 6 penetrates both parts 2, 4, wherein the lower shank portion 14 penetrates the lower part 4 and the upper shank portion 18 extends through the upper part 2.

The head 10 acts as a form fit element for fixing the upper part 2 to the lower part 4 by positive fit. It has a contact surface 20 that is in surface contact with upper part 2. The contact surface 20 can be smooth or be provided with at least one projection and/or one recess. The at least one projection can be rubbed into the upper part 2 and the at least one recess can receive plasticized material of the upper part 2, both supporting the form fit between the head 10 and the upper part 4.

The head 10 also has an outer surface 22 that is opposite to the contact surface 20 and that is provided with a form fit element 24 for transferring a torque (turning moment) applied by a tool holder 26 shown in figure 2 into the tool 6 and for positioning the tool 6 and the tool holder 26 relatively to each other. Exemplarily, the form fit element 24 is a pyramid-like projection.

In the shown embodiment, the upper part 2 is fixed to the lower part 4 by the head 10. The upper part 2 is clamped between the head 10 and the lower part 2. Due to the material characteristics of the tool 6, the lower shank portion 14 is in material continuity with the lower part 4, whereas the upper shank portion 18 is guided through the upper part 2 similar to a bolt or screw extending through a boring. However, the upper part 2 is also fixed to the upper shank portion 18 by adhesive forces. Additionally, as the contact surface 20 of the head 10 is in direct contact with the upper part 2, adhesive forces supporting the form fit are also acting between the head 10 and the upper part 2.

In the following figures 2 to 5 a method according to the invention is shown in detail in order to produce the overlap joint. In the figures 2 to 5 a rotational movement is illustrated by an arc-like arrow and a transversal movement is illustrated by a straight arrow:
As shown in figure 2, the parts 2, 4 are arranged partially in an overlap, wherein the upper part 4 has a melting point that is at least at the same temperature level as the melting point of the lower part 4 or lower than the melting point of the lower part 4. As in the shown embodiment, the upper part 2 is made from a carbon fibre reinforced plastic and the lower part 4 is based on aluminium, the melting point of the upper part 2 is lower than the melting point of the lower part 4.

Then, the tool 6 and the tool holder 26 are provided. As mentioned before, the tool 6 consists of a material that corresponds at least to the material characteristics of the lower part 4 and, in particular that has the same material characteristics as the lower part 4, and that avoids any material incompatibility between the tool 6 and the upper part 2. As in the shown embodiment the lower part 4 is made from aluminium and the upper part 2 does not consists carbon fibres, but glass fibres, the tool 6 is made from aluminium as well.

In order to transfer a torque applied by the tool holder 26 into the tool 6 and in order to engage releasable the tool 6 on the tool holder 26, the tool holder 26 has a front surface 28 forming a counter element 30 illustrated by dotted lines that corresponds to the form fit element 24. The positioning of the tool 6 in the tool holder 26 is such that the contact surface 20 of the head 10 projects from the tool holder 26 in the direction of the parts 2, 4 and thus in feeding direction. In the shown embodiment as the form fit element 24 has a pyrimad-like shape, the counter element 30 is a pyramid-like recess. As a matter of course, the form fit element 24 and the counter element 30 can have corresponding shapes which are different to the shown pyramid shape. However, in order to enable a rotating of the tool 6 by the tool holder 26 and thus in order to transfer a torque into the tool 6, it is preferred when the form fit 24 and the counter element 30 are not rotationally symmetrical.

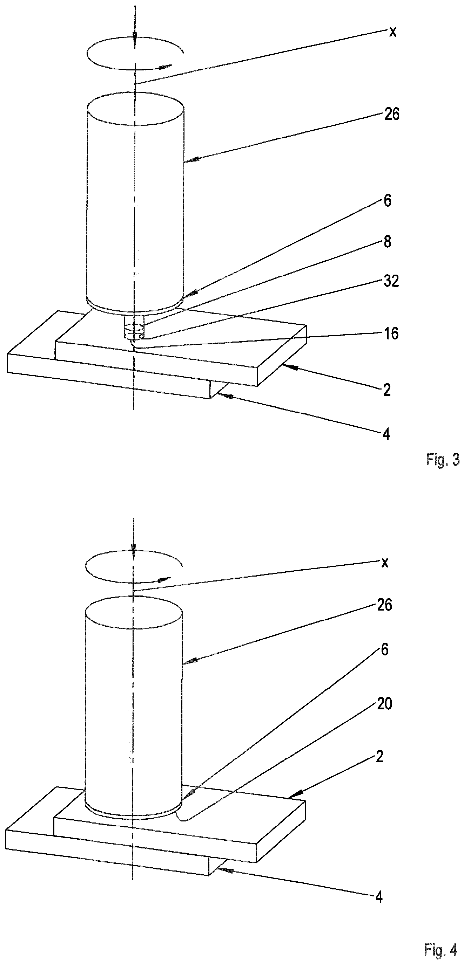

As shown in figure 3, after the positioning of the tool 6 in the tool holder 26, the tool holder 26 is rotated about its axial axis x and moved along in axial direction to the parts 2, 4. The friction surface 16 of the tool shank 8 is urged against the upper part 2 by an axial pressure force provided by the tool holder 26, whereupon due to the relative movements between the tool 6 and the parts 2, 4 caused by the rotation of the tool 6 and by the pressure force, friction heat between the shank 8 and the upper part 2 is generated causing local material of the upper part 2 in the area of the shank 8 to be plasticized. As a result, the tool holder 26 is lowered and the shank 8 penetrates the upper part 2, whereupon a boring 32 is formed.

When the shank 8 has reached with its friction surface 16 the lower part 4, local material of the lower part 4 in the area of the shank 8 is plasticized due to friction heat caused by the rotational relative movement of the tool 6 to the lower part 4 and due to the axial pressure force acting now on the lower part 4. As a result, the shank 8 is lowered and penetrates the lower part 4.

As in the shown embodiment the shank 8 has the same material characteristics as the lower part 4, the lower shank portion 14 is plasticized at its front end forming the friction surface 16 and at radial outer sections. As in the shown embodiment the shank 8 has a melting point that is higher than the melting point of the upper part 2, the shank 8 can be bored through the upper part 2 without any deformation. A weakening of the upper shank portion 18 is avoided which could occur in the case that the tool material consists of a non adequate material due to an axial counter force to the pressure force generated by the parts 2, 4 acting on the shank 8 and the circumferential friction between the upper shank portion 20 and the upper part 2.

As shown in figure 4, the lowering of tool holder 26 is stopped by the head 10 that abuts with its contact surface 20 against the upper part 2. In particular, when a predetermined clamping or pressure force is reached, the rotation of the tool holder 26 is stopped.

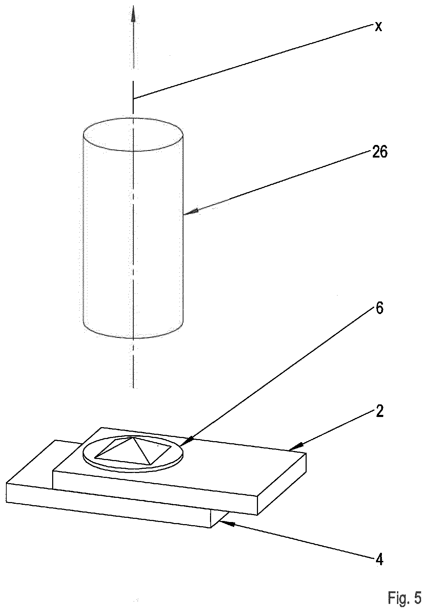

As shown in figure 5, if the predetermined pressure force has been reached, the tool holder 26 is moved backwards. As a result of the stopped movements of the tools 6 in feeding direction, the plasticized material of the parts 2, 4 and of the lower shank portion 22 shown in figure 1 are cooled down and cured. After curing, the upper part 2 is fixed by form fit caused by the broadened head 10 to the lower part 4, wherein the lower shank portion 14 is welded together with the lower part 4. However, there are adhesive forces established between the upper shank portion 18 and the upper part 2. In order to receive the plasticized material of the upper part 2 and in order to reinforce the adhesive joining between the upper shank portion 18 and the upper part 2, the upper shank portion 18 can have at least one recess into which the plasticized material of the upper part 2 can be displaced radically, for example by re-squeezing the tool 6 after the head 10 abutted against the upper part 2. Additionally, there are adhesive forces established between the upper part 2 and the contact surface 20 of the head 10 supporting the form fit between the upper part 2 and the head 10.

Exemplary process parameters of the method according to the invention in the case that the upper part 2 is a fibre reinforced plastic part and that the lower part 4 made from an aluminium alloy such as Al2Mg3 are as follows: feed rate 1mm/s, rotation speed 2000 r/min, pressure force acting on the friction surface 16 about 2kN, shank diameter 4mm. The friction surface 16 of the tool 6 is flat. In order to create a weld joint between the lower part 4 and the tool 6, the tool 6 is made from an aluminium as well. It should be noted, that the given process parameters are just for the sake of illustration. The invention is not limited to these exemplary given process parameters.

In order to ensure a reliable quality of the overlap joint, process parameters such as the axial pressure force, a shank temperature, a part temperatures in the overlap area, a feed rate of the tool holder 26, a penetrations depth of the shank 8, etc. are controlled. In the case of one of the parameters is out of tolerance, the respective process parameter is corrected automatically in real time or the tool holder 26 is deactivated automatically and thus the movements of the tool 6 are stopped.
In order to avoid any cavities between the parts 2, 4 in the area of the overlap joint, a sealant and in particular a paste-like sealant can be positioned between the parts 2, 4.
In the case that the upper part 2 and the lower part 4 show any material incompatibilities to each other, if for instance the upper part 2 is a carbon fibre reinforced plastic part and the lower part 4 is an aluminium part, a not shown shim acting as isolator can be positioned between the parts 2, 4 in the overlap area. In order to keep the method lean, for instance in order to avoid any pre-drilling of tool holes in the shim, and in order to avoid any negative impact on the stability of the overlap joint, the melting point of the shim is lower than the melting point of the lower part 4.

### Reference Symbol List

- 2: upper part
- 4: lower part
- 6: tool
- 8: shank
- 10: head
- 12: lower surface
- 14: lower shank portion
- 16: friction surface
- 18: upper shank portion
- 20: contact surface
- 22: outer surface
- 24: form fit element
- 26: tool holder
- 28: front surface
- 30: counter element
- 32: boring
- X: axial axis

## Claims

1. A Method for joining at least two parts (2, 4) in an overlap joint, **characterized by** the steps:
- Positioning the part (2, 4) partially in an overlap, wherein the upper part (2) has the same melting point as the lower part (4) or the upper part (2) has a lower melting point than the material of the lower part (4) in the overlap region;
- Positioning a tool (6) having a shank (8) and a broadened head (10) in a tool holder (26), wherein the shank (8) has a lower shank portion (14) for penetrating the lower part (4) and an upper shank portion (18) for extending through the upper part (2);
- Rotating the tool holder (26) and pressing the rotating tool (6) with its shank (8) against the upper part (2) until the shank (10) penetrates the upper part (2) and the lower part (4); and
- Stopping the movements of the tool holder (26) when the upper part (2) is clamped between the lower part (4) and the head (10), **characterised in that** the upper shank portion (18) has at least one recess, and **in that** a contact surface (20) of the head extends over the tool holder (26) in feeding direction of the tool(6) and **in that** plastified material of the upper part (2) radially displaces into the at least one recess of the upper shank portion (18).

2. The Method in accordance with claim 1, wherein a tool (6) is used that has preferably the same material characteristics as the lower part (4).

3. The Method in accordance with claim 1 or 2, wherein the upper part (2) is made from plastic and the lower part (4) is metallic.

4. The Method in accordance with claim 1, 2 or 3, wherein a sealant is positioned between the upper part (2) and the lower part (4).

5. The Method in accordance with one of the preceding claims, wherein a shim is positioned between the upper part (2) and the lower part (4).

6. Overlap joint between at least two parts (2, 4), produced by a method according to one of the preceding claims, wherein at least two parts (2, 4)are joined together by a tool (6) extending with its shank (8) through the upper part (2) and penetrating the lower part (4), wherein the lower part (2) is made from a metallic material and the tool (6) has preferably the same material characteristics as the lower part (4), wherein a lower shank portion (14) of the shank (8) is in metallic continuity with the lower part (4) and the upper part (2) is clamped between a tool head (10) and the lower part (4), **characterised in that** plastified material of the upper part (2) is radially displaced into at least one recess of an upper shank portion (18).

## Patentansprüche

1. Verfahren zum Verbinden von mindestens zwei Teilen (2, 4) in einer Überlappungsfuge, **gekennzeichnet durch** die Schritte:
- Anordnen des Teils (2, 4) in einer teilweisen Überlappung, wobei das obere Teil (2) den gleichen Schmelzpunkt wie das untere Teil (4) aufweist oder das obere Teil (2) einen niedrigeren Schmelzpunkt aufweist als das Material des unteren Teils (4) im Überlappung sbereich;
- Positionieren eines Werkzeugs (6) mit einem Schaft (8) und einem verbreiterten Kopf (10) in einem Werkzeughalter (26), wobei der Schaft (8) einen unteren Schaftabschnitt (14) zum Durchdringen des unteren Teils (4) aufweist, und einen oberen Schaftabschnitt (18) zum Erstrecken durch das obere Teil (2),
- Drehen des Werkzeughalters (26) und Drücken des rotierenden Werkzeugs (6) gegen das obere Teil (2) mit seinem Schaft (8), bis der Schaft (8) das obere Teil (2) und das untere Teil (4) durchdringt; und
- Stoppen der Bewegungen des Werkzeughalters (26), wenn das obere Teil (2) zwischen dem unteren Teil (4) und dem Kopf (10) festgeklemmt ist,
**dadurch gekennzeichnet, dass**
der obere Schaftabschnitt (18) mindestens eine Aussparung aufweist, und **dadurch, dass** sich eine Kontaktfläche (20) des Kopfes in Zuführrichtung des Werkzeugs (6) über den Werkzeughalter (26) erstreckt und **dadurch, dass** sich das plastifizierte Material des oberen Teils (2) radial in die mindestens eine Ausnehmung des oberen Schaftabschnitts (18) verschiebt.

2. Verfahren nach Anspruch 1, **dadurch gekennzeichnet, dass** ein Werkzeug (6) verwendet wird, das vorzugsweise die gleichen Materialeigenschaften wie das untere Teil (4) aufweist.

3. Verfahren nach Anspruch 1 oder 2, wobei das obere Teil (2) aus Kunststoff und das untere Teil (4) aus Metall ist.

4. Verfahren nach Anspruch 1, 2 oder 3, wobei ein Dichtungsmittel zwischen dem oberen Teil (2) und dem unteren Teil (4) positioniert ist.

5. Verfahren nach einem der vorhergehenden Ansprüche, wobei zwischen dem oberen Teil (2) und dem unteren Teil (4) eine Unterlegplatte positioniert wird.

6. Überlappungsverbindung zwischen mindestens zwei Teilen (2, 4), hergestellt nach einem Verfahren nach einem der vorhergehenden Ansprüche, wobei mindestens zwei Teile (2, 4) durch ein sich mit seinem Schaft (8) durch das obere Teil (2) erstreckendes Werkzeug (6) zusammengefügt sind, wobei es das untere Teil (4) durchdringt, wobei das untere Teil (2) aus einem metallischen Material hergestellt ist und das Werkzeug (6) vorzugsweise die gleichen Materialeigenschaften wie das untere Teil (4) aufweist, wobei ein unterer Schaftabschnitt (14) des Schaftes (8) in einer metallischen Kontinuität mit dem unteren Teil (4) ist und das obere Teil (2) zwischen einem Werkzeugkopf (10) und dem unteren Teil (4) eingespannt ist, **dadurch gekennzeichnet, dass** plastifiziertes Material des oberen Teils (2) radial in mindestens eine Ausnehmung eines oberen Schaftteils (18) verschoben wird.

## Revendications

1. Procédé pour joindre au moins deux parties (2, 4) dans un joint de chevauchement, **caractérisé par** les étapes:
- Positionner la partie (2, 4) dans un chevauchement partiel, dans laquelle la partie supérieure (2) a le même point de fusion que la partie inférieure (4) ou la partie supérieure (2) a un point de fusion plus bas que le matériau de la partie inférieure (4) dans la région de chevauchement;
- Positionner un outil (6) comportant une tige (8) et une tête élargie (10) dans un porte-outil (26), dans lequel la tige (8) présente une partie tige inférieure (14) pour pénétrer dans la partie inférieure (4) et une partie de tige supérieure (18) pour s'étendre à travers la partie supérieure (2)
- faire tourner le porte-outil (26) et presser l'outil (6) rotatif avec sa tige (8) contre la partie supérieure (2) jusqu'à ce que la tige (8) pénètre dans la partie supérieure (2) et la partie inférieure (4); et
- arrêt des mouvements du porte-outil (26) lorsque la partie supérieure (2) est serrée entre la partie inférieure (4) et la tête (10),
**caractérisé en ce que**
la partie tige supérieure (18) présente au moins un évidement et **en ce qu'**une surface de contact (20) de la tête s'étend sur le porte-outil (26) dans la direction d'avance de l'outil (6) et **en ce que** le matériau plastifié de la partie supérieure (2) se déplace radialement dans le au moins un évidement de la partie de tige supérieure (18).

2. Procédé selon la revendication 1, dans lequel on utilise un outil (6) qui a de préférence les mêmes caractéristiques de matériau que la partie inférieure (4).

3. Procédé selon la revendication 1 ou 2, dans lequel la partie supérieure (2) est en matière plastique et la partie inférieure (4) est métallique.

4. Procédé selon la revendication 1, 2 ou 3, dans lequel un agent d'étanchéité est positionné entre la partie supérieure (2) et la partie inférieure (4).

5. Procédé selon l'une des revendications précédentes, dans lequel une cale est positionnée entre la partie supérieure (2) et la partie inférieure (4).

6. Joint de chevauchement entre au moins deux parties (2, 4), réalisé par un procédé selon l'une des revendications précédentes, dans lequel au moins deux parties (2, 4) sont joints par un outil (6) s'étendant avec sa tige (8) traversant la partie supérieure (2) et pénétrant dans la partie inférieure (4), la partie inférieure (2) étant réalisée en un matériau métallique et l'outil (6) ayant de préférence les mêmes caractéristiques de matériau que la partie inférieure (4)), dans laquelle une partie de tige inférieure (14) de la tige (8) est en continuité métallique avec la partie inférieure (4) et la partie supérieure (2) est serrée entre une tête d'outil (10) et la partie inférieure (4) **caractérisé en ce que**
le matériau plastifié de la partie supérieure (2) est déplacé radialement dans au moins un évidement d'une partie de tige supérieure (18).
